(19) **Europäisches Patentamt**

**European Patent Office**

**Office européen des brevets**

(11) Veröffentlichungsnummer: **0 148 321**
**B1**

(12) # EUROPÄISCHE PATENTSCHRIFT

(45) Veröffentlichungstag der Patentschrift:
**02.08.89**

(51) Int. Cl.⁴: **G 01 L 9/04**

(21) Anmeldenummer: **84110725.3**

(22) Anmeldetag: **06.09.84**

(54) **Drucksensor mit druckempfindlichem Widerstand.**

(30) Priorität: **12.09.83 DE 3332880**

(43) Veröffentlichungstag der Anmeldung:
**17.07.85 Patentblatt 85/29**

(45) Bekanntmachung des Hinweises auf die Patenterteilung:
**02.08.89 Patentblatt 89/31**

(84) Benannte Vertragsstaaten:
**AT CH DE FR GB IT LI**

(56) Entgegenhaltungen:
**WO-A-82/00520**
**DE-A-3 125 640**
**US-A-2 629 801**

(73) Patentinhaber: **ROBERT BOSCH GMBH, Postfach 50, D-7000 Stuttgart 1 (DE)**

(72) Erfinder: **Dobler, Klaus, Dr.- Ing., Bettäckerstrasse 12, D-7016 Gerlingen (DE)**
Erfinder: **Grünwald, Werner, Dr. Dipl.- Phys., R. Schumanstrasse 21, D-7016 Gerlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

### Stand der Technik

Die Erfindung betrifft Sensoren nach der jeweiligen Gattung des Anspruchs 1 oder 10.

Es sind bereits zahlreiche Sensoren zur Erfassung des Drucks eines von einer Wandung begrenzten Mediums bekanntgeworden, die ein Widerstandelement verwenden, das mit dem Medium in Wirkverbindung steht und dessen Widerstandswert sich unter Druckeinwirkung ändert. Es sind darüber hinaus Sensoren dieser Art bekanntgeworden, bei denen dieses Widerstandelement als Schichtwiderstand ausgebildet ist und auf einem besonderen Träger aufgebracht ist. So ist beispielsweise aus der DE-A1-3 125 640 ein Sensor nach der Gattung des Anspruchs 1 oder 10 bekannt, bei dem der Träger, auf den der Schichtwiderstand aufgebracht ist, am druckraumseitigen Ende des Bauteils angeordnet ist. Das Bauteil nimmt eine aus isolierendem Material bestehende elastische Vergußmasse auf, durch die die Zuführungsleitungen zum Schichtwiderstand hindurchgeführt sind. Die Zuführungsleitungen werden vor dem Ausfüllen des Bauteils mit der Vergußmasse in einem zusätzlichen Arbeitsgang am Schichtwiderstand angelötet. Ferner hat die verwendete Vergußmasse aber nicht die erforderliche mechanische Festigkeit, um selbst als Träger für den Schichtwiderstand dienen zu können.

### Vorteile der Erfindung

Die erfindungsgemäßen Sensoren mit den jeweiligen kennzeichnenden Merkmalen der unabhängigen Ansprüche 1, 10 haben demgegenüber den Vorteil, daß für den das Widerstandelement bildenden Schichtwiderstand kein besonderer Träger erforderlich ist, da der Träger durch die das Medium begrenzende Wandung selbst und/oder durch Teile gebildet wird, die für die Hindurchführung der Anschlußleiter durch die Wandung ohnehin notwendig sind. Weitere Vorteile ergeben sich aus den abhängigen Ausprüchen.

### Zeichnung

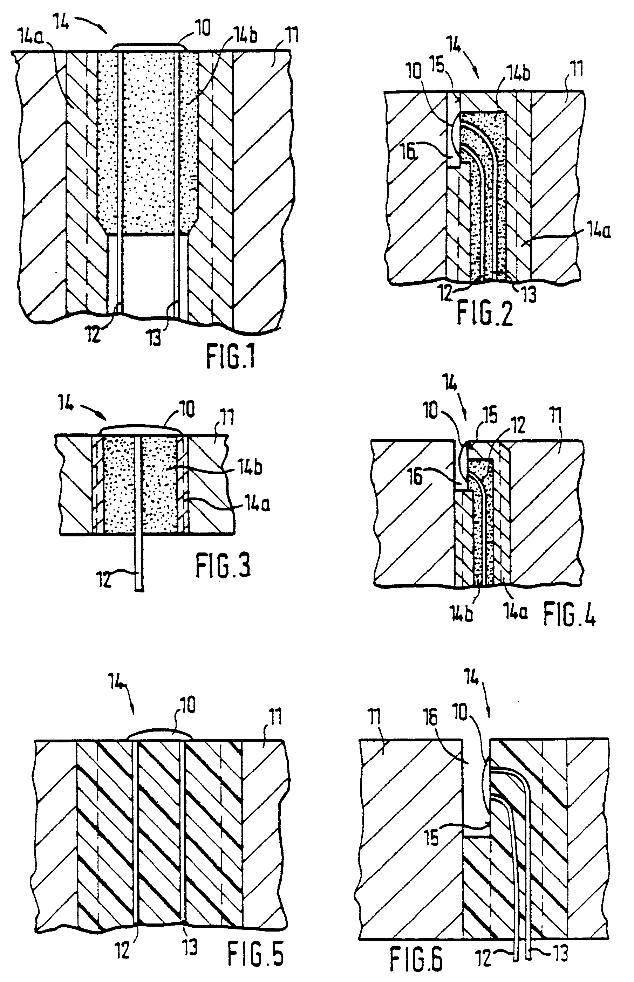

Ausführungsbeispiele der Erfindung sind in der Zeichnung dargestellt und in der nachfolgenden Beschreibung näher erläutert. Es zeigen: Figur 1 bis 10 jeweils ein Schnittbild durch eine Ausführungsform eines erfindungsgemäßen Sensors.

### Beschreibung der Ausführungsbeispiele

Der erfindungsgemäße Sensor ist dazu vorgesehen, den Druck in einem Medium unter Verwendung eines seinen Widerstandwert unter Druckeinwirkung ändernden Widerstandelements 10 zu erfassen, wobei das Medium mit dem Widerstandelement in Wirkverbindung steht und von mindestens einer Wandung 11 begrenzt ist. Die Wandung kann Bestandteil eines geschlossenen oder eines offenen Behälters, einer Rohrleitung oder einer Rinne sein, und das Medium kann strömen oder ruhen.

Der Sensor eignet sich insbesondere zur Messung hoher Drücke, wie sie beispielsweise in Hydrauliksystemen oder Einspritzpumpen von Verbrennungsmotoren auftreten. Im letzterem Fall sind die Sensoren Teil eines Regelsystems, bei dem verschiedene Betriebsparameter zur Regelung einer Brennkraftmaschine herangezogen werden, unter anderem die Einspritzmenge, die mittelbar über den Druck in der Einspritzpumpe ermittelt wird.

Bei dem in Figur 1 dargestellten ersten Ausführungsbeispiel eines erfindungsgemäßen Sensors ist zur Befestigung des Widerstandelements 10 an der Wandung 11 und zur Unterbringung von zwei Anschlußleitern 12 und 13, die zum Widerstandelement 10 führen und als Zuführungsleitungen ausgebildet sind, ein Bauteil 14 vorgesehen, das als Schraube ausgebildet, in die Wandung 11 eingeschraubt und auf diese Weise druckdicht durch die Wandung 11 hindurchgeführt ist. Anstelle der Schraube 14 kann auch ein Einpreßteil verwendet werden. Die Schraube 14 besteht dabei aus einem metallischen Grundkörper 14a und einer von diesem umschlossenen Glaseinschmelzung 14b, die die beiden Zuführungsleitungen 12 und 13 aufnimmt und bis zu dem druckraumseitigen Ende des Grundkörpers 14a reicht. Anstelle der Glaseinschmelzung 14b kann auch eine Einschmelzung aus Keramik oder anderen, elektrisch isolierenden und druckdichten Stoffen verwendet werden. Die Glaseinschmelzung 14b dient als Träger für das Widerstandelement 10, das als Dickschichtwiderstand ausgebildet ist und sich zwischen den beiden druckraumseitigen Enden der Zuführungsleitungen 12 und 13 und jeweils noch etwas darüber hinaus erstreckt. Anstelle des Dickschichtwiderstandes 10 kann als Widerstandelement auch ein Dünnschichtwiderstand verwendet. Die beiden Zuführungsleitungen 12 und 13 und die Glaseinschmelzung 14b schließen an ihren druckraumseitigen Enden bündig miteinander ab, so daß die beiden Zuführungsleitungen 12 und 13 durch den Schichtwiderstand 10 leicht überbrückt werden können, ohne daß dabei besondere, über die übliche Dick- oder Dünnschichttechnologie hinausgehende Maßnahmen erforderlich wären. Der so ausgebildete Sensor kann deshalb besonders einfach und kostengünstig hergestellt werden.

Figur 2 zeigt ein zweites Ausführungsbeispiel eines Sensors gemäß der Erfindung. Bei diesem Ausführungsbeispiel ist der Schichtwiderstand 10 auf eine seitliche Fläche 15 der Schraube 14 aufgebracht, die durch Anfräsung der Schraube 14 parallel zu ihrer Achse hergestellt worden ist. Der Schichtwiderstand 10 wird auf diese Weise so angeordnet, daß er nicht dem Druckraum, sondern der zur Aufnahme der Schraube 14 in der Wandung 11 vorgesehenen Gewindebohrung zugekehrt ist. Die durch Anfräsen der Schraube 14 gebildete seitliche Fläche 15 ist dabei gegenüber der Gewindebohrung so weit zurückversetzt, daß der dadurch entstehende schlitzförmige Hohlraum 16 nicht nur zur Aufnahme des Schichtwiderstandes 10 ausreicht, sondern genügend Raum zur Aufnahme des Mediums bei der Messung des Druckes bietet. Dieses Ausführungsbeispiel hat den Vorteil, daß der Schichtwiderstand 10 gegenüber Beschädigung besonders gut geschützt ist und bei der Messung das Volumen des Druckraums nicht verringert, was insbesondere bei der Verwendung des Sensors zur Druckmessung in Verteilereinspritzpumpen von Kraftfahrzeugen vorteilhaft ist. Wenn der vom Schichtwiderstand 10 nicht beanspruchte Teil des Hohlraums 16 stört, kann dieser Leerraum durch Ausgießen mit einer dauerelastischen, aber druckfesten Masse ausgefüllt werden.

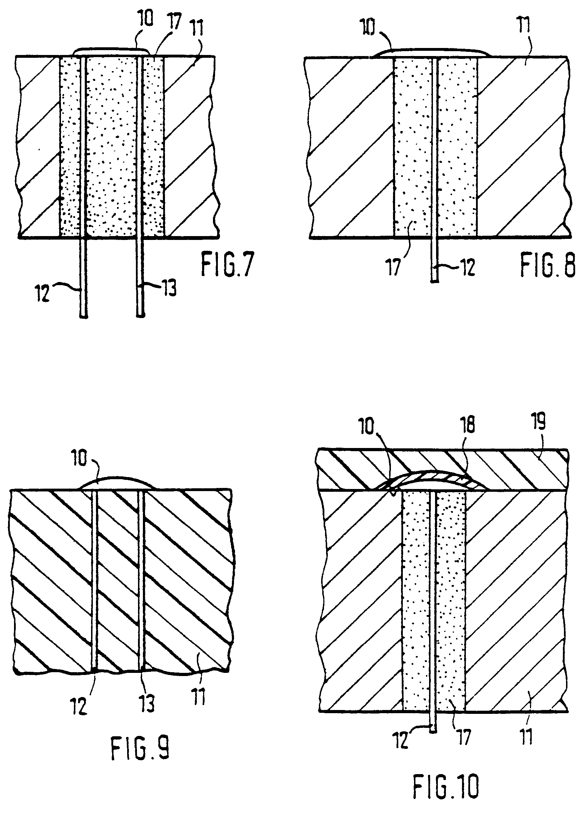

In Figur 3 ist ein drittes Ausführungsbeispiel eines erfindungsgemäßen Sensors dargestellt Dieses Ausführungsbeispiel unterscheidet sich vom Ausführungsbeispiel nach Figur 1 lediglich dadurch, daß nur einer der beiden zum Widerstandelement 10 führenden metallischen Anschlußleiter als Zuführungsleitung 12 ausgebildet ist und von der Glaseinschmelzung 14b umschlossen ist. Der andere Anschlußleiter wird durch den metallischen Grundkörper 14a der Schraube 14 selbst gebildet. Die von der Glaseinschmelzung 14b umschlossene Zuführungsleitung 12 wird zweckmäßigerweise in die Achse der Schraube 14 gelegt.

Beim Ausführungsbeispiel nach Figur 4 ist wie beim Ausführungsbeispiel nach Figur 3 der eine Anschlußleiter als Zuführungsleitung 12 ausgebildet, während der andere Anschlußleiter durch den metallischen Grundkörper 14a gebildet wird. In der geometrischen Anordnung entspricht das Ausführungsbeispiel nach Figur 4 jedoch dem nach Figur 2.

Die Ausführungsbeispiele nach den Figuren 5 und 6 entsprechen denen nach den Figuren 1 und 2 insoweit, als wieder zwei Zuführungsleitungen 12 und 13 zum Widerstandselement 10 führen. Das als Schraube ausgebildete Bauteil 14, das zur Aufnahme der Zuführungsleitungen 12 und 13 dient, besteht jedoch abweichend von den Figuren 1 und 2 aus einheitlichem, isolierendem Material. Auf eine Glaseinschmelzung wird deshalb hier verzichtet. Die geometrische Anordnung des Schichtwiderstandes 10 in Figur 5 entspricht der der Figur 1, die in Figur 6 der der Figur 2.

In den Figuren 7 und 8 sind zwei weitere Ausführungsbeispiele dargestellt, bei denen die isolierte Durchfürung mittels einer Einschmelzung 17 erfolgt, die unmittelbar in die Wandung 11 eingebracht wird.

Beim Ausführungsbeispiel nach Figur 7 werden mittels der Einschmelzung 17 zwei Zuführungsleitungen 12 und 13 durch die Wandung 11 isoliert hindurchgeführt und druckraum seitig analog zu Figur 1 durch das Widerstandselement 10 überbrückt.

Beim Ausführungsbeispiel nach Figur 8 wird dagegen nur eine Zuführungsleitung 12 mittels der Einschmelzung 17 durch die Wandung 11 isoliert hindurchgeführt, während die aus elektrisch leitendem Material bestehende Wandung 11 den zweiten Anschlußleiter bildet.

Das Widerstandselement 10 ist druckraumseitig vom Ende der Zuführungsleitung 12 bis zur Wandung 11 geführt und überdeckt den Randbereich der Wandung, der die Einschmelzung 17 umgibt, geringfügig, so daß ein elektricher Kontakt mit der Wandung gewährleistet ist.

In Figur 9 ist eine Anordnung dargestellt, deren Anwendung dann möglich ist, wenn die Wandung aus isolierendem Material besteht. In diesem Falle werden zwei Zuführungsleitungen 12 und 13 unmittelbar durch die Wandung 11 druckdicht hindurchgeführt und druckraumseitig durch den Dickschichtwiderstand 10 überbrückt.

Figur 10 zeigt eine Abwandlung des Ausführungsbeispiels nach Figur 8, bei der auf den Dickschichtwiderstand 10 eine Schutzschicht 18 aufgebracht ist und die Schutzschicht 18 von einer druckelastischen Vergußmasse 19 umgeben ist.

## Patentansprüche

1. Sensor zur Erfassung des Drucks eines von einer Wandung (11) begrenzten Mediums unter Verwendung eines seinen Widerstandswert unter Druckeinwirkung ändernden, mit dem Medium in Wirkverbindung stehenden, als Schichtwiderstand ausgebildeten Widerstandselements (10), wobei ein durch die Wandung (11) druckdicht hindurchgeführtes Bauteil (14, 17) vorgesehen ist, und das Bauteil (14, 17) mindestens teilweise aus einem elektrisch isolierendem Material besteht, das bis zu dem dem Druckraum abgewandten Ende des Widerstandselements (10) reicht und als dessen Träger dient, dadurch gekennzeichnet, daß der Sensor mit mindestens einer durch das Bauteil (14, 17) zu dem Widerstandselement (10) geführten und ungefähr bündig mit dem elektrisch isolierenden Material abschließenden Zuführungsleitung (12, 13) versehen ist.

2. Sensor nach Anspruch 1, dadurch gekennzeichnet, daß das Bauteil (14) aus einem metallischen Grundkörper (14a) und einer von diesem umschlossenen, zur Aufnahme zweier Zuführleitungen (12, 13) dienenden und bis zu dem druckraumseitigen Ende des Grundkörpers (14a) reichenden Masse (14b) aus isolierendem Material besteht.

3. Sensor nach Anspruch 1, dadurch gekennzeichnet, daß das Bauteil (14) aus einem metallischen Grundkörper (14a) und einer von diesem umschlossenen, zur Aufnahme der Zuführungsleitung (12) dienenden und bis zu dem druckraumseitigen Ende des Grundkörpers (14a) reichenden Masse (14b) aus isolierendem Material besteht, und daß die zweite Zuführleitung (13) durch den metallischen Grundkörper (14a) des Bauteils (14) gebildet wird.

4. Sensor nach Anspruch 1, dadurch gekennzeichnet, daß das Bauteil (14) ein Vergußteil aus einer elektrisch isolierenden Masse ist.

5. Sensor nach einem der Ansprüche 1 bis 4, dadurch gekennzeichnet, daß die Masse (14b) als Einschmelzung aus Glas, Keramik oder einem anderen, elektrisch isolierenden und druckdichten Material ausgebildet ist.

6. Sensor nach einem der Ansprüche 1 bis 5, dadurch gekennzeichnet, daß derjenige Teil des druckraumseitigen Endes des Bauteils (14), der mit dem Schichtwiderstand (10) belegt ist, dem Druckraum zugewandt ist.

7. Sensor nach einem der Ansprüche 1 bis 5, dadurch gekennzeichnet, daß derjenige Teil des druckraumseitigen Endes des Bauteils (14), der mit dem Schichtwiderstand (10) belegt ist, durch eine seitliche Fläche (15) dieses Bauteils (14) definiert ist, die der Mantelfläche der für das Bauteil (14) in der Wandung (11) vorgesehenen Öffnung zugekehrt ist und gegenüber dieser Mantelfläche derart zurückversetzt ist, daß zwischen dem auf die seitliche Fläche (15) des Bauteils (14) aufgebrachten Schichtwiderstand (10) und der Mantelfläche der Wandung (11) ein schlitzförmiger Hohlraum (16) zur Aufnahme des Mediums gebildet wird.

8. Sensor nach einem der Ansprüche 1 bis 7, dadurch gekennzeichnet, daß das Bauteil (14) eine Schraube ist.

9. Sensor nach Anspruch 8 zur Messung des Drucks im Pumpengehäuse einer Verteiler-Einspritzpumpe für Kraftfahrzeuge, dadurch gekennzeichnet, daß die Schraube (14) die Entlüftungsschraube der Verteilereinspritzpumpe ist.

10. Sensor zur Erfassung des Drucks eines von einer aus isolierendem Material bestehenden Wandung (11) begrenzten Mediums unter Verwendung eines seinen Widerstandswert unter Druckeinwirkung ändernden, mit dem Medium in Wirkverbindung stehenden, als Schichtwiderstand ausgebildeten Widerstandselements (10) und zweier durch die Wandung (11) hindurchgeführter zum Widerstandselement (10) führenden Zuführleitungen (12, 13), dadurch gekennzeichnet, daß das Widerstandselement (10) unmittelbar auf die druckraumseitige Oberfläche der Wandung (11) aufgebracht ist und sich mindestens vom druckraumseitigen Ende der einen Zuführungsleitung (12) zum druckraumseitigen Ende der anderen Zuführungsleitung (13) erstreckt.

11. Sensor nach einem der Ansprüche 1 bis 10, dadurch gekennzeichnet, daß der Schichtwiderstand (10) als Dickschichtwiderstand ausgebildet ist.

12. Sensor nach einem der Ansprüche 1 bis 11, dadurch gekennzeichnet, daß auf den Schichtwiderstand (10) eine Schutzschicht (18) aufgebracht ist.

13. Sensor nach einem der Ansprüche 1 bis 12, dadurch gekennzeichnet, daß der Schichtwiderstand (10) oder die Schutzschicht (18) von einer druckelastischen Vergußmasse (19) umgeben ist.

**Claims**

1. Sensor for detecting the pressure of a medium delimited by a wall (11) employing a resistor element (10) constructed as a laminar resistor, operatively associated with the medium and which varies its resistance value by the influence of pressure, a component (14, 17) passed pressure-tightly through the wall (11) being provided, and the component (14, 17) consists at least partly of an electrically insulating material which extends as far as the end of the end resistor element (10) remote from the pressure chamber and serves as its substrate, characterized in that the sensor is provided with at least one supply lead (12, 13) passed through the component (14, 17) to the resistor element (10) and terminating approximately flush with the electrically insulating material.

2. Sensor according to Claim 1, characterized in that the component (14) consists of a metallic basic element (14a) and of a compound (14b) of insulating material enclosed by the latter, serving to receive two supply leads (12,13) and extending as far as the end of the basic element (14a) on the pressure chamber side.

3. Sensor according to claim 1, characterized in that the component (14) consists of a metallic basic element (14a) and of a compound (14b) of insulating material enclosed by the latter, serving to receive the supply lead (12) and extending as far as the end of the basic element (14a) on the pressure chamber side, and that the second supply lead (13) is formed by the metallic basic element (14a) of the component (14).

4. Sensor according to Claim 1, characterized in that the component (14) is a casting of an electrically insulating compound.

5. Sensor according to one of Claims 1 to 4, characterized in that the compound (14b) is constructed as a fusion of glass, ceramic or another electrically insulating and pressure-tight material.

6. Sensor according to one of Claims 1 to 5, characterized in that the part of the end of the component (14) on the pressure chamber side which is fitted with the laminar resistor (10) faces the pressure chamber.

7. Sensor according to one of Claims 1 to 5, characterized in that the part of the end of the component (14) on the pressure chamber side which is fitted with the laminar resistor (10) is defined by a lateral surface (15) of said component (14) which faces the envelope surface of the aperture provided in the wall (11) for the component (14) and is set back relative to said envelope surface so that a slit-shaped cavity (16) to receive the medium is formed between the laminar resistor (10) mounted on the lateral surface (15) of the component (14) and the envelope surface of the wall (11).

8. Sensor according to one of Claims 1 to 7, characterized in that the component (14) is a screw.

9. Sensor according to Claim 8 for measuring the pressure in the pump housing of a distributor injection pump for motor vehicles, characterized in that the screw (14) is the vent screw of the distributor injection pump.

10. Sensor for detecting the pressure as a medium delimited by a wall (11) consisting of insulating material employing a resistor element (10) constructed as a laminar resistor which is operatively associated with the medium and which varies its resistance value by the influence of pressure, and of two supply leads (12, 13) leading through the wall (11) to the resistor element (10), characterized in that the resistor element (10) is mounted directly on the surface of the wall (11) on the pressure chamber side and extends at least from the end of the one supply lead (12) on the pressure chamber side to the end of the other supply lead (13) on the pressure chamber side.

11. Sensor according to one of Claims 1 to 10, characterized in that the laminar resistor (10) is constructed as a thick laminar resistor.

12. Sensor according to one of Claims 1 to 11, characterized in that a protective layer (18) is applied on the laminar resistor (10).

13. Sensor according to one of Claims 1 to 12, characterized in that the laminar resistor (10) or the protective layer (18) is surrounded by a pressure-resilient grout (19).

**Revendications**

1. Détecteur pour capter la pression d'un fluide délimité par une paroi (11) en utilisant un élément résistant (10), revêtant la forme d'une résistance à couche, se trouvant en liaison fonctionnelle avec le fluide et modifiant sa valeur de résistance sous l'action de la pression, une partie constitutive (14, 17) traversant, de façon étanche à la pression, la paroi (11) étant prévue, et cette partie constitutive (14, 17) étant constituée au moins partiellement par un matériau électriquement isolant, qui s'étend jusqu'à l'extrémité opposée à la chambre de pression de l'élément résistant (10) et qui sert de support à cet élément, détecteur caractérisé en ce qu'il est muni d'au moins une liaison d'alimentation (12, 13) allant à travers la partie constitutive (14, 17) à l'élément résistant (10) et se terminant à peu près en affleurement avec le matériau électriquement isolant.

2. Détecteur selon la revendication 1, caractérisé en ce que la partie constitutive (14) est constituée d'une structure métallique de base (14a) et d'une masse (14b) en un matériau isolant entourée par cette structure de base, servant à loger deux liaisons d'alimentation (12, 13) et s'étendant jusqu'à l'extrémité, côté chambre de pression de la structure de base (14a).

3. Détecteur selon la revendication 1, caractérisé en ce que la partie constitutive (14) est constituée d'une structure métallique de base (14a) et d'une masse (14b) en un matériau isolant entourée par cette structure de base, servant à loger la liaison d'alimentation (12) et s'étendant jusqu'à l'extrémité côté chambre de pression de la structure de base (14a), tandis que la seconde liaison d'alimentation (13) est constituée par la structure métallique de base (14a) de la partie constitutive (14).

4. Détecteur selon la revendication 1, caractérisé en ce que la partie constitutive (14) est une pièce moulée en une masse électriquement isolante.

5. Détecteur selon une des revendications 1 à 4, caractérisé en ce que la masse (14b) est une masse fondue en verre, en céramique ou bien en un autre matériau électriquement isolant et étanche à la pression.

6. Détecteur selon une des revendications 1 à 5, caractérisé en ce que la partie, qui est revêtue par la résistance en couche (10), de l'extrémité côté chambre de pression de la partie constitutive (14) est tournée vers la chambre de pression.

7. Détecteur selon une des revendications 1 à 5, caractérisé en ce que la partie, qui est revêtue de la résistance en couche (10), de l'extrémité côté chambre de pression de la partie constitutive (14) est définie par une face latérale (15) de cette partie constitutive (14), cette face latérale étant tournée vers la surface enveloppe de l'ouverture prévue dans la paroi (11) pour la partie constitutive (14) et étant décalée en arrière vis à vis de cette surface enveloppe de façon qu'entre la résistance en couche (10) appliquée sur la face latérale (15) de la partie constitutive (14) et la surface enveloppe de la paroi (11), soit ménagé un espace creux en forme de fente (16) destiné à recevoir le fluide.

8. Détecteur selon une des revendications 1 à 7, caractérisé en ce que la partie constitutive (14) est une vis.

9. Détecteur selon la revendication 8 pour mesurer la pression dans le boîtier d'une pompe d'injection à répartition pour des véhicules automobiles, détecteur caractérisé en ce que la vis (14) est la vis de purge de la pompe d'injection à répartition.

10. Détecteur pour capter la pression d'un fluide délimité par une paroi (11) en un matériau isolant en utilisant un élément résistant (10) revêtant la forme d'une résistance en couche, se trouvant en liaison fonctionnelle avec le fluide, et modifiant sa valeur de résistance sous l'action de la pression et en utilisant deux liaisons d'alimentation (12, 13) passant à travers la paroi (11) et aboutissant à l'élément résistant (10), détecteur caractérisé en ce que l'élément résistant (10) est rapporté directement sur la surface côté chambre de pression de la paroi (11) et s'étend au moins de l'extrémité côté chambre de pression de l'une (12) des liaisons d'alimentation vers l'extrémité côté chambre de pression de l'autre liaison d'alimentation (13).

11. Détecteur selon une des revendications 1 à 10, caractérisé en ce que la résistance en couche (10) revêt la forme d'une résistance à couche épaisse.

12. Détecteur selon une des revendications 1 à 11, caractérisé en ce que sur la résistance en couche (10) est déposée une couche de protection (18).

13. Détecteur selon une des revendications 1 à 12, caractérisé en ce que la résistance en couche (10) ou bien la couche de protection (18) est entourée par une masse coulée élastique à la pression.

FIG.1

FIG.2

FIG.3

FIG.4

FIG.5

FIG.6

FIG.7

FIG.8

FIG.9

FIG.10